# EUROPEAN PATENT APPLICATION

(11) **EP 4 456 356 A1**
(43) Date of publication of application: **30.10.2024**
(21) Application number: 23170156.6
(22) Date of filing: 26.04.2023
(51) Int. Cl.: H02G 11/00, H02G 3/04

(54) **CABLE MANAGEMENT SYSTEM FOR AN ELECTRIC VEHICLE CHARGING STATION AND ELECTRIC VEHICLE CHARGING STATION**

(71) Applicant: ABB E-mobility B.V., 2629 JG Delft (NL)
(72) Inventor: LA ROSA, Cristoforo, 52025 Montevarchi (IT); OCCHIOLINI, Omar, 52010 Talla (IT); SEMBOLONI, Alessandro, 52019 Laterina Pergine Valdarno (IT)
(74) Representative: Zimmermann & Partner Patentanwälte mbB

(57) **Abstract**

A cable management system for an electric vehicle charging station (10) is described. The cable management system includes a pulley (13) rotatably mounted to a support structure (17). The pulley (13) has a first portion (131) with a first guide groove (13G1) with a constant radius R2 and a second portion (132) with a second guide groove (13G2) with a dynamic radius (r1) provided around a rotation axis (133) of the pulley (13). Further, the cable management system includes a charging cable (11) having a first end (11A) connected to a charging connector (12) and a second end (11B) connected to a power supply (16), wherein a first wire (111) is connected to a portion between the first end (11A) and the second end (11B) of the charging cable (11). The first wire (111) is guided within the first guide groove (13G1). Additionally, the cable management system includes a mechanical counterforce system (14) configured for counteracting at least a weight of the charging cable (11) between the pulley (13) and the charging connector (12), wherein the mechanical counterforce system (14) is connected with the pulley via a second wire (141) guided within the second guide groove (13G2).

## Description

### TECHNICAL FIELD

Embodiments of the present disclosure relate to cable management systems for electric vehicle charging stations. Further embodiments of the present disclosure relate to charging stations having such cable management systems.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialized charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

A common problem associated with recharging electric vehicles is related to the cables that connect the charging connector to an electricity source. These cables may present obstructions if they are run from a charging station to an electric vehicle across an access way or may be at risk of damage. Further, conventionally the force needed to move the charging cable with the charging connector to the car socket is quite high and uncomfortable for the user.

Accordingly, in view of the above, there is a demand for improved cable management systems and electric vehicle charging stations which at least partially overcome the problems of the state of the art.

### SUMMARY

In light of the above, a cable management system for an electric vehicle charging station and an electric vehicle charging station according to the independent claims are provided. Further aspects, advantages, and features are apparent from the dependent claims, the description, and the accompanying drawings.

According to an aspect of the present disclosure, a cable management system for an electric vehicle charging station is provided. The cable management system includes a pulley rotatably mounted to a support structure. The pulley has a first portion with a first guide groove with a constant radius provided around a rotation axis of the pulley. Additionally, the pulley has a second portion with a second guide groove with a dynamic radius provided around the rotation axis of the pulley. Additionally, the cable management system includes a charging cable having a first end connected to a charging connector and a second end connected to a power supply. A first wire is connected to a portion between the first end and the second end of the charging cable. The first wire is guided within the first guide groove. Further, the cable management system includes a mechanical counterforce system configured for counteracting at least a weight of the charging cable between the pulley and the charging connector. The mechanical counterforce system is connected with the pulley via a second wire guided within the second guide groove.

Accordingly, beneficially a cable management system for an electric vehicle charging station is provided which is improved compared to the state of the art. In particular, the cable management system according to embodiments of the present disclosure is beneficially configured for reducing the retraction force when the charging connector is moved from the rest position to the car socket. Further, the cable management system as described herein provides for the possibility of selecting the retraction force according to the specific requirements by selecting a ratio of the constant radius R2 to the dynamic radius r1 as desired. Additionally, embodiments of the cable management system according to present disclosure have the advantage that compared to conventional systems the counterforce of the mechanical counterforce system can be reduced, such that, for example, a weight of a counter mass needed to balance the charging cable can be decreased. Further, embodiments of the cable management system according to present disclosure provide for the possibility to increase the charging cable extension length without substantially increasing the retraction force, as compared to conventional systems.

According to another aspect of the present disclosure, an electric vehicle charging station is provided. The electric vehicle charging station includes a cable management system according to any embodiments described herein.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic view of an electric charging station with a cable management system according to embodiments of the present disclosure;
Fig. 2 shows a schematic perspective view of a pulley according to embodiments of the present disclosure;
Fig. 3 shows a schematic sectional view of a pulley according to embodiments of the present disclosure;
Fig. 4 shows a graph illustrating the pulling force as a function of pulley revolutions upon unwinding the first wire connected to the charging cable; and
Fig. 5 shows a graph illustrating the torque ratio as a function of pulley revolutions upon unwinding the first wire connected to the charging cable.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

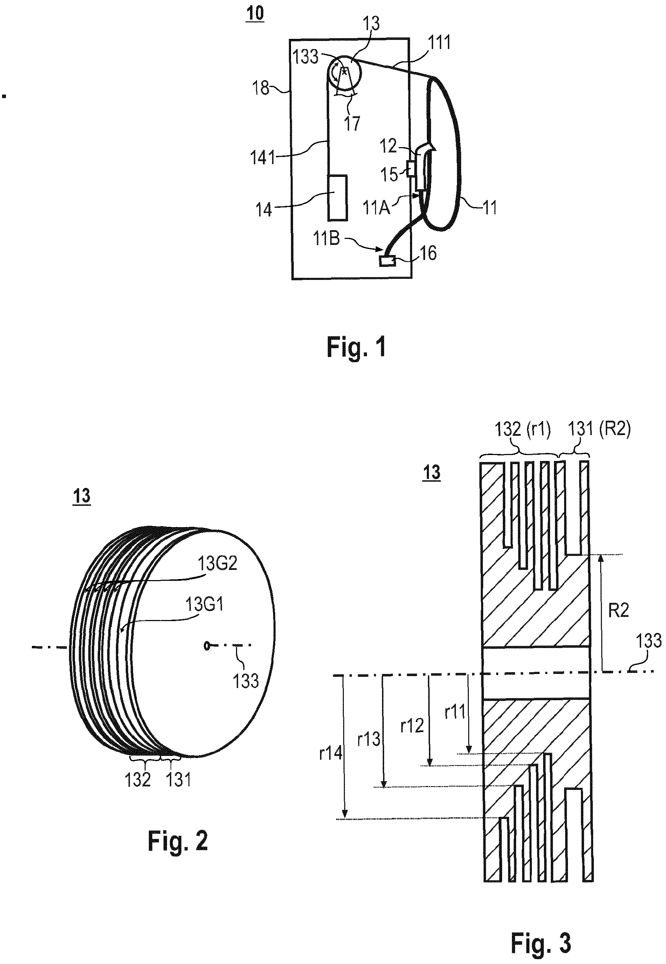

With exemplary reference to Figs. 1 to 5, a cable management system for an electric vehicle charging station 10 according to embodiments of the present disclosure are described. In the present disclosure, a "cable management system for an electric vehicle charging station" can be understood as a system which is designed to organize and protect the charging cable that connects the station to an electric vehicle during charging. Typically, the cable management system is configured to ensure that the cables are secure, easily accessible, and free from potential hazards.

According to embodiments, which can be combined with other embodiments described herein, the cable management system for an electric vehicle charging station 10 includes a pulley 13 rotatably mounted to a support structure 17. The support structure 17 can be an integral part of a housing 18 of the charging station or a separate component provided inside the housing of the charging station. For example, the separate component providing the support structure 17 may be a fixed to the housing 18. As exemplarily shown in Fig. 1, typically the support structure 17 is provided in an upper portion of the housing. Further, typically the pulley 13 is arranged within the housing 18 of the charging station 10.

As exemplarily indicated by the double-sided arrow in Fig. 1, typically the pulley 13 is rotatable in clockwise and anti-clockwise direction around a rotation axis 133 of the pulley 13. Typically, the rotation axis 133 is a substantially horizontal rotation axis. The term "substantially horizontal" can be understood as horizontal within a tolerance T of T≤10°, particularly T≤5°, from the perfect horizontal.

As exemplarily shown in Figs. 2 and 3, according to embodiments, which can be combined with other embodiments described herein, the pulley 13 includes a first portion 131 with a first guide groove 13G1. The first guide groove 13G1 has a constant radius R2 provided around the rotation axis 133 of the pulley 13, as indicated in Fig. 3. In the present disclosure, the "constant radius of the first guide groove" can be understood in that the radial distance of the bottom of the first guide groove 13G1 from the rotation axis 133 is constant over the length of the first guide groove. The length of the first guide groove can be understood as the unwinding length of the first guide groove upon rotation of the pulley.

According to embodiments, which can be combined with other embodiments described herein, the pulley 13 includes a second portion 132 with a second guide groove 13G2. The second guide groove 13G2 has a dynamic radius r1 provided around the rotation axis 133 of the pulley 13. In the present disclosure, the "dynamic radius of the second guide groove" can be understood in that the radial distance of the bottom of the second guide groove 13G2 from the rotation axis 133 changes over the length of the second guide groove. The length of the second guide groove can be understood as the unwinding length of the second guide groove upon rotation of the pulley. For better understanding, in the bottom of the cross-sectional view of Fig. 3, four different radii of the dynamic radius r1 of the second guide groove are indicated, namely r11, r12, r13, and r14. It is to be understood, that typically the dynamic radius of the second guide groove continuously changes. Accordingly, the second guide groove can be a spiral with the dynamic radius r1. With reference to Fig. 3, it is to be understood that the spiral second guide groove extends along the rotation axis 133. In other words, the second guide groove 13G2 can be a spiral guide groove.

As exemplarily shown in Fig. 1, the cable management system includes a charging cable 11 having a first end 11A and a second end 11B. The first end 11A of the charging cable 11 is connected to a charging connector 12. The second end 11B of the of the charging cable 11 is connected to a power supply 16. A first wire 111 is connected to a portion of the charging cable 11 between the first end 11A and the second end 11B of the charging cable 11. The first wire 11 is guided within the first guide groove 13G1 as described herein. It is to be understood that typically the first wire 111 is fixed to a bottom of the first guide groove 13G1. Further, it is to be understood that when the charging connector 12 is fastened to the fastening system 15, one or more windings of the first wire 111 are provided in the first guide groove 13G1. In other words, typically the first wire 111 is wound around the pulley within the first guide groove 13G1 for at least one revolution, when the charging connector 12 is fastened to the fastening system 15.

It is to be noted, that the charging connector may also be referred to as charging gun. Further, it is to be understood, that in a charging process the charging connector is connected with a socket of the electric vehicle and the power for charging the vehicle is provided from the power supply via the charging cable to the vehicle.

Further, as exemplarily shown in Fig. 1, the cable management system includes a mechanical counterforce system 14. The mechanical counterforce system 14 is configured for counteracting at least a weight of the charging cable 11 between the pulley 13 and the charging connector 12. The mechanical counterforce system 14 is connected with the pulley via a second wire 141. The second wire 141 is guided within the second guide groove 13G2 as described herein.

In the present disclosure, a "mechanical counterforce system" can be understood as a mechanism that is used to counteract an external force, particularly the force caused by the weight of the charging cable 11 between the pulley 13 and the charging connector 12. In this regard, it is to be noted that the weight of the charging cable 11 between the pulley 13 and the charging connector 12 may change, particularly increase, when the charging connector 12 is removed from the charging station and connected with an electric vehicle.

Typically, the mechanical counterforce system includes a component, also referred to as counterforce, that produces an opposing force or motion to balance out the external force. For example, the mechanical counterforce system 14 may include at least one of a counterweight and a spring. Accordingly, in the context of the mechanical counterforce system 14, which includes at least one of a counterweight and a spring, the mechanical counterforce system works by utilizing the principle of counterbalancing. A counterweight is a heavy object that is used to balance out the weight of another object, while a spring is an elastic object that stores potential energy when compressed or stretched. In other words, the mechanical counterforce system 14 may either employ a counterweight or a spring (or both) to provide a counterforce that opposes the force caused by the weight of the charging cable 11 with or without the weight of the charging connector 12.

According to embodiments, which can be combined with other embodiments described herein, the mechanical counterforce system 14 can be a separate system. Alternatively, the mechanical counterforce system 14 can be integrated on the pulley, for instance in form of a spring mechanism.

It is to be understood that the specific design and implementation of the mechanical counterforce system will depend on the application and requirements of the system. However, according to embodiments which can be combined with any other embodiments described herein, the mechanical counterforce system is designed to provide a stable and reliable counterforce that can balance out external forces caused by the weight of the charging cable (with or without the charging connector), and ensure that the desired motion or operation is achieved with precision and accuracy.

According to embodiments, which can be combined with other embodiments described herein, the second guide groove 13G2 is provided over two or more turns of the pulley 13. In particular, the second guide groove 13G2 is provided over three or more turns of the pulley 13. Fig. 3 shows an example in which the second guide groove 13G2 is provided over four turns.

According to embodiments, which can be combined with other embodiments described herein, the second wire 141 is fixed to the pulley 13. In particular, typically the second wire 141 is fixed to the pulley 13 at a portion of the second guide groove 13G2 with minimum dynamic radius r1. In particular, the second wire 141 may be fixed to a bottom of the second guide groove 13G2 at a position where the radial distance of the bottom of the second guide groove 13G2 from the rotation axis 133 is minimal.

With exemplary reference to Fig. 3, according to embodiments, which can be combined with other embodiments described herein, a minimum of the dynamic radius r1 is smaller than the constant radius R2 of the first guide groove 13G1.

Further, with exemplary reference to Fig. 3, according to embodiments, which can be combined with other embodiments described herein, a maximum of the dynamic radius r1 is larger than the constant radius R2 of the first guide groove 13G1.

Moreover, with exemplary reference to Fig. 3, according to embodiments, which can be combined with other embodiments described herein, the dynamic radius r1 increases from a fixation of the second wire 141 within the second guide groove 13G2 towards an exit of the second wire 141 from the second guide groove 13G2.

As exemplary shown in Fig. 3, according to embodiments, which can be combined with other embodiments described herein, typically the dynamic radius r1 increases in an axial direction of the pulley 13 away from the first portion 131. According to a not shown alternative configuration, the dynamic radius r1 may increases in an axial direction of the pulley 13 towards the first portion 131.

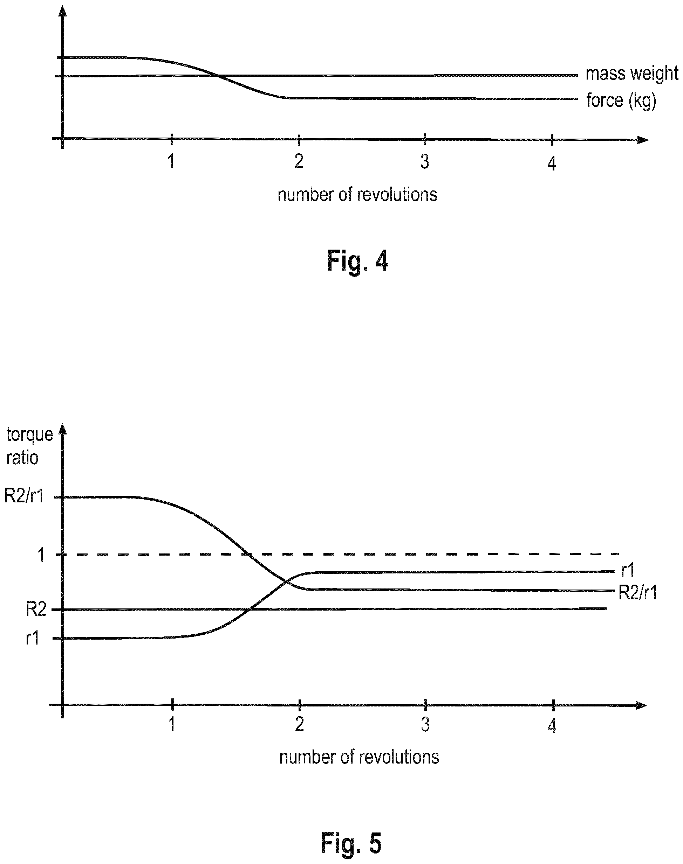

For better understanding of the cable management system according to embodiments of the present disclosure, Fig. 4 shows a graph illustrating the pulling force as a function of pulley revolutions upon unwinding the first wire 111 connected to the charging cable11 , i.e. when a user removes the charging connector 12 from the charging station 10 for connecting the charging connector 12 with an electric vehicle. The pulling force may also be referred to as retraction force. Fig. 4 shows an example in which the pulling force decreases as the number of revolutions of the pulley increases from an initial state from an initial state at which the charging connector 12 is attached to the charging station 10. Further, Fig. 4 shows an example for which the mechanical counterforce system 14 includes a counterweigh of constant mass.

Fig. 5 shows a graph illustrating the torque ratio as a function of pulley revolutions upon unwinding the first wire 111 connected to the charging cable 11. The torque ration is given by the ratio of the constant radius R2 of the first guide groove 13G1 to the dynamic radius r1 of the second guide groove 13G2, i.e. R2/r1. As exemplarily shown in Fig. 5, the torque ratio R2/r1 decreases as the number of revolutions of the pulley increases from an initial state from an initial state at which the charging connector 12 is attached to the charging station 10.

It is to be understood, that Figs. 4 and 5 only show non-limiting qualitative examples for explaining the principle of the present invention.

In view of the embodiments described herein, it is to be understood that compared to the state of the art an improved cable management system for an electric vehicle charging station as well as an improved electric vehicle charging station including a cable management system according to embodiments described herein are provided. In particular, embodiments of the present disclosure beneficially provide for a reduction of the retraction force when the charging connector is moved from the rest position to the car socket. Further, the cable management system as described herein provides for the possibility of selecting the retraction force according to the specific requirements by selecting a ratio of the constant radius R2 to the dynamic radius r1 as desired. Additionally, embodiments of the present disclosure have the advantage that, compared to conventional systems, the counterforce of the mechanical counterforce system can be reduced, such that, for example, a weight of a counter mass needed to balance the charging cable can be decreased. Further, embodiments according to present disclosure provide for the possibility to increase the charging cable extension length without substantially increasing the retraction force, as compared to conventional systems.

While the foregoing is directed to embodiments, other and further embodiments may be devised without departing from the basic scope, and the scope is determined by the claims that follow.

### REFERENCE NUMBERS

- 10: charging station
- 11: charging cable
- 11A: first end
- 11B: second end
- 111: first wire
- 12: charging connector
- 13: pulley
- 13G1: first guide groove
- 13G2: second guide groove
- 131: first portion with constant radius R2
- 132: second portion with dynamic radius r1
- 133: rotation axis of pulley
- 14: mechanical counterforce system
- 141: second wire
- 15: fastening system for fastening the charging connector to the support structure
- 16: power supply
- 17: support structure
- 18: housing

## Claims

1. A cable management system for an electric vehicle charging station (10), comprising:
- a pulley (13) rotatably mounted to a support structure (17), the pulley (13) having a first portion (131) with a first guide groove (13G1) with a constant radius R2 and a second portion (132) with a second guide groove (13G2) with a dynamic radius (r1) provided around a rotation axis (133) of the pulley (13),
- a charging cable (11) having a first end (11A) connected to a charging connector (12) and a second end (11B) connected to a power supply (16), wherein a first wire (111) is connected to a portion between the first end (11A) and the second end (11B) of the charging cable (11), and wherein the first wire (111) is guided within the first guide groove (13G1), and
- a mechanical counterforce system (14) configured for counteracting at least a weight of the charging cable (11) between the pulley (13) and the charging connector (12), wherein the mechanical counterforce system (14) is connected with the pulley via a second wire (141) guided within the second guide groove (13G2).

2. The cable management system of claim 1, wherein the second guide groove (13G2) is a spiral guide groove.

3. The cable management system of claim 1 or 2, wherein the second guide groove (13G2) is provided over two or more turns, particularly over three or more turns, of the pulley (13).

4. The cable management system of any of claims 1 to 3, wherein the second wire (141) is fixed to the pulley (13) at a portion of the second guide groove (13G2) with minimum dynamic radius (r1).

5. The cable management system of any of claims 1 to 4, wherein a minimum of the dynamic radius (r1) is smaller than the constant radius (R2) of the first guide groove (13G1).

6. The cable management system of any of claims 1 to 5, wherein a maximum of the dynamic radius (r1) is larger than the constant radius (R2) of the first guide groove (13G1).

7. The cable management system of any of claims 1 to 6, wherein the dynamic radius (r1) increases from a fixation of the second wire (141) within the second guide groove (13G2) towards an exit of the second wire (141) from the second guide groove (13G2).

8. The cable management system of any of claims 1 to 7, wherein the dynamic radius (r1) increases in an axial direction of the pulley (13) away from the first portion (131).

9. The cable management system of any of claims 1 to 8, wherein the mechanical counterforce system (14) includes at least one of a counterweight and a spring.

10. The cable management system of any of claims 1 to 9, wherein the mechanical counterforce system (14) is a separate system.

11. The cable management system of any of claims 1 to 9, wherein the mechanical counterforce system (14) is integrated on the pulley, particularly in form of a spring mechanism.

12. An electric vehicle charging station (10), comprising a cable management system according to any of claims 1 to 11.
